**Europäisches Patentamt**

**European Patent Office**

**Office européen des brevets**

(19)

(11) Veröffentlichungsnummer : **0 436 577 B1**

(12)

# EUROPÄISCHE PATENTSCHRIFT

(45) Veröffentlichungstag der Patentschrift :
25.03.92 Patentblatt 92/13

(51) Int. Cl.$^5$ : **G01G 23/06, G12B 3/08**

(21) Anmeldenummer : **89910424.4**

(22) Anmeldetag : **25.09.89**

(86) Internationale Anmeldenummer :
**PCT/DE89/00605**

(87) Internationale Veröffentlichungsnummer :
**WO 90/03555 05.04.90 Gazette 90/08**

(54) **VERFAHREN UND MESSEINRICHTUNG ZUR BESTIMMUNG MECHANISCHER MESSGRÖSSEN.**

(30) Priorität : **27.09.88 DE 3832751**

(43) Veröffentlichungstag der Anmeldung :
**17.07.91 Patentblatt 91/29**

(45) Bekanntmachung des Hinweises auf die
Patenterteilung :
**25.03.92 Patentblatt 92/13**

(84) Benannte Vertragsstaaten :
**CH DE GB LI**

(56) Entgegenhaltungen :
**GB-A- 525 165**
**US-A- 1 878 554**
**US-A- 3 677 357**
**US-A- 4 062 417**

(73) Patentinhaber : **DR. HANS BOEKELS GMBH &
CO
Postfach 847
W-5100 Aachen (DE)**

(72) Erfinder : **HORN, Jürgen
Steinkamp 12
W-3301 Schwülper-Lagesbüttel (DE)**

(74) Vertreter : **König, Werner, Dipl.-Ing.
Habsburgerallee 23-25
W-5100 Aachen (DE)**

Jouve, 18, rue Saint-Denis, 75001 PARIS

## Beschreibung

Die Erfindung betrifft ein Verfahren zur Bestimmung mechanischer Meßgrößen, bei dem sich ein Meßgrößenaufnehmer unter der Einwirkung der zu bestimmenden Meßgröße elastisch verformt und dadurch die mechanische Meßgröße in ein proportionales elektrisches Meßsignal umformt und bei dem das Aufnehmerwiderlager nach einer Änderung der Meßgröße oder der Einwirkung einer Störgröße zu einer sinnvoll gesteuerten Gegenbewegung relativ zum Inertialsystem gezwungen wird.

Die Erfindung betrifft des weiteren eine entsprechende Meßeinrichtung zur Bestimmung mechanischer Meßgrößen mit einem sich unter der Einwirkung einer mechanischen Meßgröße elastisch verformenden Meßgrößenaufnehmer, der die Meßgröße in ein proportionales elektrisches Signal umformt, und mit einem elektrisch ansteuerbaren Stellmotor, der das Aufnehmerwiderlager nach einer sprungförmigen Änderung der Meßgröße oder dem Einwirken einer Störgröße zu sinnvollen Gegenbewegungen relativ zum Inertialsystem anregt.

Meßeinrichtungen für die Bestimmung mechanischer Meßgrößen, wie z.B. Kräfte, Gewichte, Drehmomente, Spannungen, Drücke oder Wege, enthalten vielfach einen elastischen Meßgrößenaufnehmer, der sich unter Einwirkung der zu bestimmenden Meßgröße elastisch und zu ihr proportional verformt. Solche Aufnehmer können beispielsweise resistiver, kapazitiver oder induktiver Natur sein, wobei die Verformung oder Auslenkung des Meßfederkörpers dann zur Umformung der mechanischen Meßgröße in ein - zumeist proportionales - elektrisches Meßsignal führt. Dabei speichert der Aufnehmer durch seine elastische Verformung eine potentielle Energie, die vom Meßobjekt aufzubringen ist. Dieses ist in aller Regel massebehaftet und besitzt somit z.B. eine träge Masse, ein Trägheitsmoment oder eine Strömungsträgheit. Zusammen mit den bewegten lasteinleitungsseitigen Elementen der Meßeinrichtung und der Elastizität des Aufnehmers bildet diese Einheit dann ein schwingungsfähiges System, das nach einer sprungförmigen Änderung der Eingangsgröße einen in Abhängigkeit von der Eigendämpfung des Systems mehr oder weniger lang andauernden Einschwingvorgang durchläuft, bevor es in seiner stationären Gleichgewichtslage zur Ruhe kommt. Die Periodendauer der Einschwingzyklen verhält sich dabei - nicht linear - proportional zur Trägheit und zur Nachgiebigkeit des elastischen Aufnehmers. Bis zum Erreichen der sogenannten kritischen Dämpfung, bis zu der es zu Überschwingungen über die neue stationäre Gleichgewichtslage kommt, vergrößert sich die Periodendauer der Eigenschwingung gleichsinnig und verkürzt sich die Dauer des Einschwingvorganges gegensinnig mit der Eigendämpfung des Meßsystems. Ist diese größer als die kritische Dämpfung, schwingt das System nicht mehr über die stationäre Endlage hinaus, sondern nähert sich dieser langsam asymptotisch.

Oftmals entstehen darum z.B. bei zeitkritischen industriellen Anwendungen elastischer Aufnehmer Probleme durch zu große Einschwing- und Beruhigungszeiten der damit aufgebauten Meßeinrichtungen. Aus diesem Grund besteht bei solchen Anwendungen ein vornehmliches Interesse daran, zu kürzeren Einschwingzeiten nach einer Änderung der Meßgröße zu gelangen, damit entsprechend rasch ein aktueller Meßwert zur Verfügung steht. Nach dem heutigen Stand der Technik sind verschiedene Methoden bekannt, die zu einer schnellen Umformung der mechanischen Meßgröße in einen elektrischen Meßwert mittels elastischer Aufnehmer führen sollen: So können Meßsysteme mit elastischen Aufnehmern zum einen mechanisch, z.B. durch pneumatische oder hydraulische Dämpfungseinrichtungen, bedämpft werden, wobei das Erreichen der kritischen Dämpfung naturgemäß besonders wünschenswert ist. Oftmals können aber in der Praxis wegen der geringen Federwege vieler elastischer Aufnehmer mit vertretbarem Aufwand nur erheblich kleinere Eigendämpfungen realisiert werden, besonders dann, wenn die Forderung nach absoluter Rückwirkungsfreiheit der Dämpfungseinrichtung auf die Meßgenauigkeit erfüllt werden soll. Dennoch führt auch das Erreichen der hier idealen kritischen Dämpfung noch zu Einschwingzeiten, die die natürliche Periodendauer des ungedämpft schwingenden Meßsystems um ein Vielfaches übersteigt.

Die in den meisten Fällen einfachste Möglichkeit zur rascheren Gewinnung eines Meßwertes aus einem mechanisch schwach bedämpften elastischen Meßsystem besteht darin, das elektrische Ausgangssignal des Aufnehmers analog oder digital zu filtern. Während die analoge Filterung durch Festlegen einer oberen Grenzfrequenz unterhalb der Eigenfrequenz nur zu vergleichsweise kleinen Verbesserungen führen kann, arbeitet ein digitales Filter durch ausschließliches selektives Unterdrücken der System-Eigenfrequenzen i.a. deutlich erfolgreicher. Dennoch lassen sich auch mit größerem Aufwand durch ein solches Filter sehr genaue Meßwerte erst gewinnen, wenn das Meßsystem schon mehrere Schwingungen um die stationäre Endlage ausgeführt hat.

Stand der Technik ist darüber hinaus die intelligente Meßdatenverarbeitung, bei der die analogen elektrischen Ausgangssignale elastischer Meßgrößenaufnehmer in kurzen Intervallen abgetastet und in digitale Werte umgesetzt werden. Sind die wichtigsten Systemkenngrößen, wie Federsteifigkeit, Eigendämpfung und Masse der bewegten Teile des Meßsystems, in hinreichendem Maße bekannt, so kann man durch intelligente Auswertung der ersten Meßdaten nach einer Änderung der Meßgröße den neuen stationären Gleichgewichtszustand und damit den der Meßgröße entsprechenden Meßwert abschätzen. Außerdem kann ständig der vorausberechnete dynamische Verlauf des Einschwingvorganges mit dem tatsächlichen abgetasteten Verlauf verglichen und damit die Genauigkeit des geschätzten Meßwertes laufend erhöht werden, bis diese innerhalb vorgegebener Grenzen liegt. Neben der genauen Kenntnis der Systemkenngrößen ist für die Anwendung solcher Schätzverfahren eine individuell an die jeweilige Meßeinrichtung angepaßte intelligente Elektronik mit hohem Software-Aufwand erforderlich. Je nach geforderter Genauigkeit steht ein nutzbarer Meßwert frühestens nach der Dauer von gut zwei Perioden eines schwach gedämpft schwingenden Systems zur Verfügung.

Aufgabe der vorliegenden Erfindung ist es, im Hinblick auf diese Nachteile des Standes der Technik ein Verfahren sowie eine Meßeirichtung anzugeben, mit denen es möglich ist, die Einschwingzeiten derartiger Meßsysteme mit elastischen Aufnehmern stark zu verkürzen.

Ausgehend von einem Verfahren der eingangs beschriebenen Art wird diese Aufgabenstellung dadurch gelöst, daß das Aufnehmerwiderlager nach einer sprungförmigen Änderung der Meßgröße zu einer sinnvoll gesteuerten Gegenbewegung relativ zum Inertialsystem (Erdmittelpunkt) gezwungen wird.

Ausgehend von einer Meßeinrichtung der oben angegebenen Art wird die Aufgabe der Beschreibung einer entsprechenden Vorrichtung dadurch gelöst, daß ein elektrisch steuerbarer Stellmotor vorgesehen ist, der das Widerlager des elastischen Meßgrößenaufnehmers nach einer linderung der Meßgröße bewegt sowie dadurch, daß die Vorrichtung eine das Ausgangssignal des Aufnehmers verarbeitende Schaltung zur Ansteuerung des Stellmotors umfaßt.

Erfindungsgemäß ist es für das schwingungsfähige System ausreichend, wenn es über eine geringe passive Eigendämpfung verfügt, um dennoch zu extrem kurzen Einschwingdämpfungen zu gelangen. Dies wird durch den Einsatz eines Stellmotors möglich, der, angesteuert durch das Ausgangssignal des elastischen Meßgrößenaufnehmers, das Aufnehmerwiderlager nach einer Änderung der Eingangsgröße in der Weise bewegt, daß dem Meßsystem in kürzester Zeit jegliche Schwingungsenergie entzogen wird.

Im Idealfall gelingt es dem Stellmotor, das Aufnehmerwiderlager in beliebig kurzer Zeit zu solchen Verlagerungen zu bringen, die in ihrer absoluten Größe (Betrag) gleich, aber in ihrer jeweiligen Richtung genau entgegengesetzt zu den Verlagerungen sind, mit denen die Lasteinleitungsstelle eines herkömmlichen, d.h. mit einem unbewegten Aufnehmerlager gebauten, elastischen Aufnehmers auf plötzliche Änderungen der Meßgröße reagiert. Die nach dem Einleiten einer von Null verschiedenen Meßgröße in dem elastischen Aufnehmer, der Meßfeder, im stationären Gleichgewichtszustand zu speichernde elastische Energie wird hier also nicht mehr vom Meßobjekt selbst, sondern vom Stellmotor aufgebracht. Da das Meßsystem der Meßgröße dann zu jedem Zeitpunkt eine gleich große Reaktionskomponente entgegensetzt, erscheint es nach außen völlig unnachgiebig, d.h. die Steifheit und damit die Eigenfrequenz des Meßsystems wirken als beliebig angewachsen. Da sich zudem die in jedem realen Meßsystem vorhandene natürliche Dämpfung in gleichem Maße erhöht, lassen sich beim Einsatz von Stellmotoren angemessen großer Leistung durch ein solchermaßen gestaltetes Verfahren bzw. Meßsystem beliebig kurze Einschwingzeiten realisieren.

Im einfachsten Fall kann der Stellmotor direkt von dem elektrischen Ausgangssignal der Meßfeder angesteuert werden, da dieses Signal ja zu jedem Zeitpunkt verzögerungsfrei eine Information über die augenblickliche Auslenkung des elastischen Aufnehmers liefert. Unter Auslenkung ist dabei die relative Bewegung zwischen Lasteinleitungsstelle und Aufnehmerwiderlager zu verstehen.

In der Praxis wird es einem Stellmotor mit begrenzter Leistung aber naturgemäß nicht gelingen, das massebehaftete Aufnehmerwiderlager in unendlich kurzer Zeit nach einer Änderung der Meßgröße zu einer die Auslenkung der Meßfeder vollständig kompensierenden Gegenverlagerung zu bringen und dabei gleichzeitig die Meßfeder im erforderlichen Maße vorzuspannen. Statt dessen wird die Gegenverlagerung in der Weise ausgeführt, daß sie nur zu einer zeitverzögerten und/oder nur nahezu vollständigen Kompensation der Meßfederauslenkung führt. In jedem Falle aber erscheint die Steifheit des Meßsystems nach außen auch dann noch signifikant vergrößert, wobei die Eigenfrequenz des Meßsystems sowie dessen Eigendämpfung in gleichem Maße anwachsen.

In Abhängigkeit davon, wie die Steuerung der Gegenverlagerung ausgelegt wird, wird es zu einer mehr oder weniger kleinen Anzahl von gedämpften Schwingungen der erhöhten Eigenfrequenz um die stationäre Gleichgewichtslage kommen. Gemäß einer bevorzugten Ausführung der Erfindung wird daher die Gegenverlagerung des Aufnehmerwiderlagers bis zu dem Zeitpunkt fortgeführt, an dem dynamische Auslenkungen der Meßfeder vollständig abgeklungen sind. Dies ist jedoch für das Funktionieren des erfindungsgemäßen Systems nicht zwingend erforderlich. Schon eine einmalige Bewegung des Widerlagers entgegen der Meßfederauslenkung führt zu erheblich reduzierten Einschwingzeiten.

Wird die motorische Bewegung des Aufnehmerwiderlagers lediglich gesteuert, so kann es zur Aufintegration von Fehlern und Störeinflüssen kommen, aus denen nicht eliminierbare Nullpunktabweichungen resultieren würden. Gemäß einer Weiterbildung der erfindungsgemäßen Maßeinrichtung ist daher ein Lagesensor vorzusehen, der die Verlagerungen des Aufnehmerwiderlagers erfaßt und dessen Lageregelung ermöglicht.

Erfüllt der Stellmotor die an ihn gestellten Aufgaben nur unzureichend, indem es zu größeren zeitlichen Verzögerungen zwischen der Auslenkung der Meßfeder und der Gegenverlagerung des Aufnehmerwiderlagers kommt, so kann das Gesamtsystem instabil werden. Gemäß einer bevorzugten Ausführung der Erfindung wird daher, aufbauend auf einer Systemanalyse, die oben beschriebene Lagesteuerung bzw. -regelung des Aufnehmerwiderlagers ersetzt durch eine Geschwindigkeitssteuerung bzw. -regelung. Hierbei kann die zur Ansteuerung des Geschwindigkeitsstellmotors dann erforderliche Stell- bzw. Führungsgröße, die Auslenkungsgeschwindigkeit des Aufnehmers, im einfachsten Fall durch Differentiation seines elektrischen Ausgangssignals gewonnen werden.

Denkbar ist jedoch auch der Einsatz eines Geschwindigkeitsaufnehmers zur Erfassung der Auslenkgeschwindigkeit, d.h. der Differenzgeschwindigkeit zwischen Lasteinleitungsstelle und Aufnehmerwiderlager.

Schließlich ist auch eine Lösung denkbar, bei der die Ansteuerung des Stellmotors zur Bewegung des Aufnehmerwiderlagers durch eine intelligente Schaltung mit Mikrorechner erfolgt. In diesem Fall können die bekannten, wichtigsten Systemparameter der jeweiligen Meßvorrichtung zu einer intelligenten Steuerung oder Regelung der Widerlagerbewegung herangezogen werden. Die im Sinne einer kürzestmöglichen Einschwingzeit optimale Gegenbewegung des Aufnehmerwiderlagers kann dabei aus dem zeitlichen Verlauf der ersten nach einer plötzlichen Änderung der Meßgröße von dem Aufnehmer erfaßten Meßwerte vorausberechnet und unter Nutzung der vollen Antriebsleistung des eingesetzten Stellmotors ausgeführt werden. Außerdem kann der als bestmöglich berechnete Verlauf der Gegenbewegung durch Abtastung des von dieser Bewegung beeinflußten Aufnehmerausgangssignals ständig korrigiert und weiter optimiert werden. Demgegenüber steht naturgemäß der hohe Aufwand einer intelligenten Steuerung oder Regelung, der aber bei außergewöhnlich zeikritischen Anwendungsfällen gerechtfertigt sein kann.

Wie eingangs erwähnt, erhöht sich die Eigendämpfung einer erfindungsgemäßen Meßvorrichtung proportional zur Erhöhung der Eigenfrequenz. Ist die Masse der bewegten Teile des Stellmotors und des Aufnehmerwiderlagers klein gegenüber der sich aus den Massen des Meßobjektes und der bewegten Teile auf der Lasteinleitungsseite des Aufnehmes zusammensetzenden Gesamtmasse, so wird die aus einer in Serie mit dem Stellmotor liegenden Dämpfungseinrichtung resultierende Dämpfung ebenfalls und in gleichem Maße durch die erfindungsgemäße Vorrichtung erhöht. Eine solche mechanische, seriell wirkende Dämpfungseinrichtung ist hier jedoch wenig sinnvoll, da sie auch noch nach dem vollständigen Einschwingen der Meßvorrichtung voll von der Meßgröße und allen Totlasten beaufschlagt wäre und der Stellmotor infolgedessen den Eingang der Dämpfungseinrichtung ständig bewegen müßte, um ihren Ausgang in Ruhe zu halten. Mit den Methoden der Systemanalyse läßt sich jedoch leicht ein wirkungsgleiches elektrisches Element finden, aus dem in die Schaltung zur Steuerung bzw. Regelung der Bewegung des Aufnehmerwiderlagers eingebunden eine entsprechende Dämpfung des Systems resultiert. In einer erfindungsgemäßen Weiterbildung des Meßverfahrens bzw. der Meßeinrichtung wird daher ein solches elektrisches Bauelement, vornehmlich ein ohm'scher Widerstand, vorgesehen, das die erforderliche und i.a. aufwendig zu realisierende mechanische Dämpfung teilweise oder vollständig ersetzt.

Die Erfindung sowie die ihr zugrundeliegenden Gesetzmäßigkeiten und Erkenntnisse werden nachfolgend anhand des Anwendungsbeispiels einer elektromechanischen Waage mit Dehnungsmeßstreifen (DMS)-Meßgrößenaufnehmer unter Bezugnahme auf die beigefügten Zeichnungen genauer erläutert. Es zeigen:

Fig. 1 den schematischen Aufbau einer DMS-Waage gemäß der Erfindung mit einem Stellmotor, einer Regelschaltung, einem Wegaufnehmer sowie einer elektronischen Auswerteschaltung;

Fig. 2 das Blockschaltbild der Anordnung nach Fig. 1, zusätzlich mit einer zur Meßfeder parallel wirkenden mechanischen Dämpfungseinrichtung ausgestattet;

Fig. 3 das Einschwingverhalten einer erfindungsgemäßen Meßeinrichtung im Vergleich zu demjenigen eines nicht oder nur schwach gedämpften, konventionellen elastischen Meßsystems;

Fig. 4 das Blockschaltbild der Anordnung nach Fig. 1, zusätzlich mit einer in Serie mit dem Stellmotor wirkenden mechanischen Dämpfungseinrichtung versehen;

Fig. 5 das Blockschaltbild der Anordnung nach Fig. 1, wobei die mechanische Dämpfungseinrichtung gemäß Fig. 4 durch ein elektrisches Dämpfungselement ersetzt wurde.

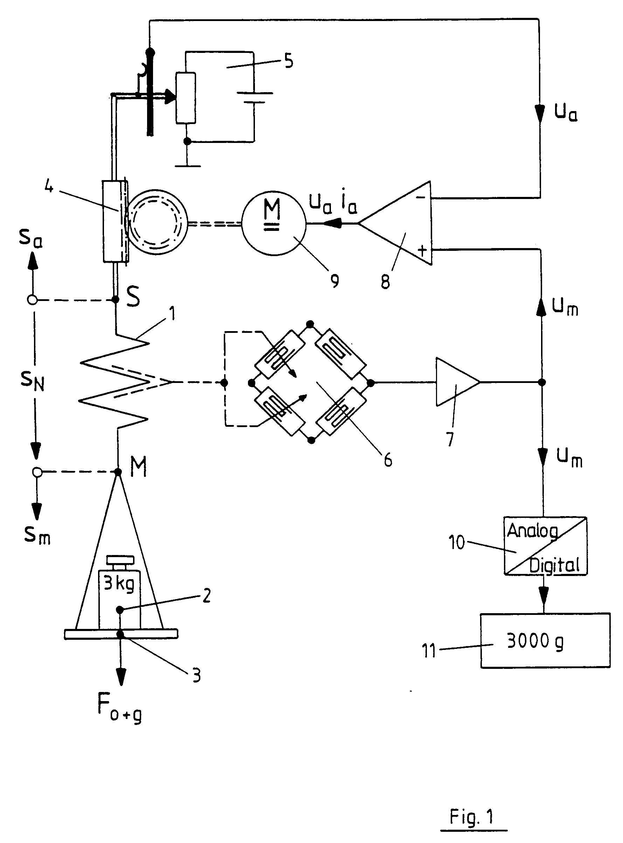

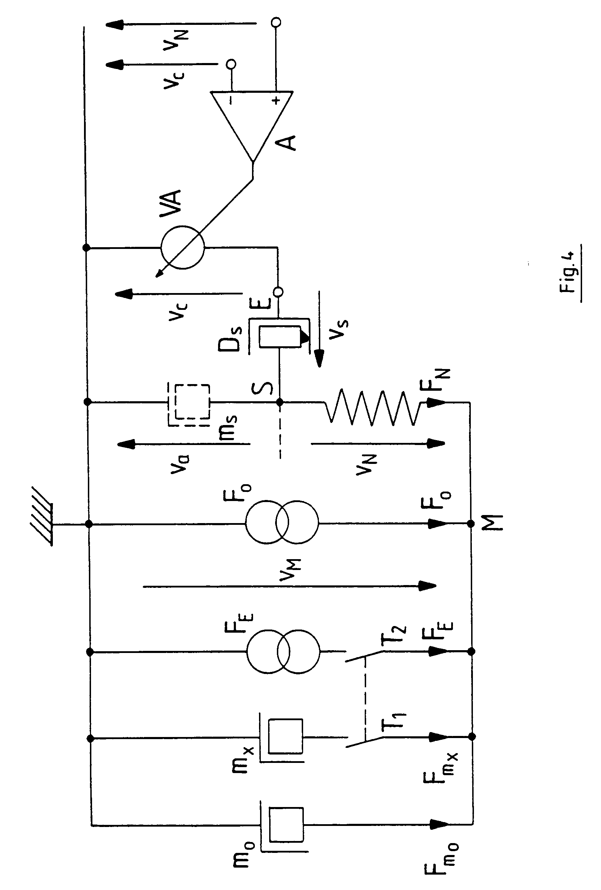

In Fig. 1 ist der Aufbau einer erfindungsgemäßen Meßeinrichtung am Beispiel einer elektromechanischen elastischen Wägeeinrichtung dargestellt. Der Meßgrößenaufnehmer 1 arbeitet hier nach dem Dehnungsmeßstreifenprinzip, bei dem die mechanische, der Auslenkung proportionale Verformung eines Federkörpers durch resistive, i.a. in Brückenschaltung angeordnete Elemente 6 in ein elektrisches Ausgangssignal umgeformt wird. Ohne die im oberen Bereich der Fig. 4 dargestellten Elemente, den Lagesensor 5, die Steuerschaltung 8 sowie den Stellmotor 9 mit Getriebe 4, handelte es sich hier um eine konventionelle DMS-Waage mit festem, d.h. gegenüber dem Inertialsystem ortsfestem Aufnehmerwiderlager S. Nach dem Auflegen eines Gewichtes 2 auf die Lastschale 3 und dem Abklingen des Einschwingvorganges ist die Meßfeder 1 elastisch um den Wert $s_N$ ausgelenkt und die Waagschale um die Verlagerung $s_M$ abgesenkt. Wegen der ortsfesten Einspannung des Aufnehmerwiderlagers ($s_a = 0$) gilt:

$$(1) \qquad s_N = s_m.$$

Gleichzeitig hat sich das Ausgangssignal aus der Brückenschaltung aus den auf der Meßfeder angebrachten DMS 6 von $u_o$ auf einen Wert $u_m$ geändert, wird über den Verstärker 7 elektrisch verstärkt und durch die Elektronik 10 in einen von der Einheit 11 angezeigten digitalen Meßwert umgesetzt. Das zu messende Gewicht 2 bildet zusammen mit der Totlast der Waagschale und bewegten Teilen der Meßfeder 1 in Einheit mit der Nachgiebigkeit der Feder ein schwingungsfähiges System. Aus diesem Grund wird sich die neue stationäre Gleichgewichtslage der Meßeinrichtung nach einer sprungförmigen, ggf. impulsbehafteten Änderung der Meßgröße erst nach einem in Abhängigkeit von der natürlichen Dämpfung der Anordnung mehr oder weniger lang andauernden Einschwingvorgang einstellen. Im Normalfall lassen sich DMS-Meßeinrichtungen wegen deren geringen Federwegen nur außerordentlich schwer wirkungsvoll und dabei bzgl. der Meßgenauigkeit rückwirkungsfrei mechanisch dämpfen. Oftmals erreicht die natürliche Dämpfung (Luft) solcher Systeme nur gerade ein Zehntel der hier idealen, sogenannten kritischen Dämpfung, bei der die Meßeinrichtung nicht mehr über ihre stationäre Gleichgewichtslage überschwingt. In jedem Falle aber, also auch wenn die kritische Dämpfung tatsächlich realisiert werden kann, wird ein derartiges konventionelles Meßsystems erst nach einer Zeit verwertbare Meßergebnisse liefern, die mehrere Periodendauern der natürlichen Schwingung einer entsprechenden ungedämpften Meßeinrichtung in Anspuch nimmt.

Bei einer erfindungsgemäßen Meßeinrichtung gemäß Fig. 1 ist das Aufnehmerwiderlager S dagegen nicht mehr ortsfest, sondern kann durch den Stellmotor 9, ggf. über ein Getriebe 4, bewegt werden. Die Ansteuerung des Stellmotors 9 übernimmt dabei das Verstärkerelement 8, dessen Eingangsgrößen das durch 7 verstärkte Ausgangssignal $u_m$ der Aufnehmerbrücke und ggf. das elektrische Ausgangssignal $u_a$ des die Verlagerung $s_a$ des Aufnehmerwiderlagers S erfassenden Lagesensors 5 sind. Im einfachsten Fall wird die Steuerung/Regelung der Widerlagerbewegung in der Weise ausgelegt, daß gilt:

$$(2) \qquad s_a(t) = s_N(t).$$

In diesem Falle is $s_m(t)$ zu jedem Zeitpunkt gleich Null, d.h. auch die Nachgiebigkeit des Meßsystems erscheint nach außen hin gleich Null.

Ein realer Stellmotor mit begrenzter Leistung kann aber die Lage eines massebehafteten körpers naturgemäß nicht sprungförmig verändern, so daß zwischen der Steuergröße $u_m(t)$ und der Auslenkung $s_a(t)$ des Widerlagers S stets eine zeitliche Verzögerung eintreten wird. Je nach Größe dieser Verzögerung kann hieraus eine Instabilität der erfindungsgemäßen Meßeinrichtung resultieren.

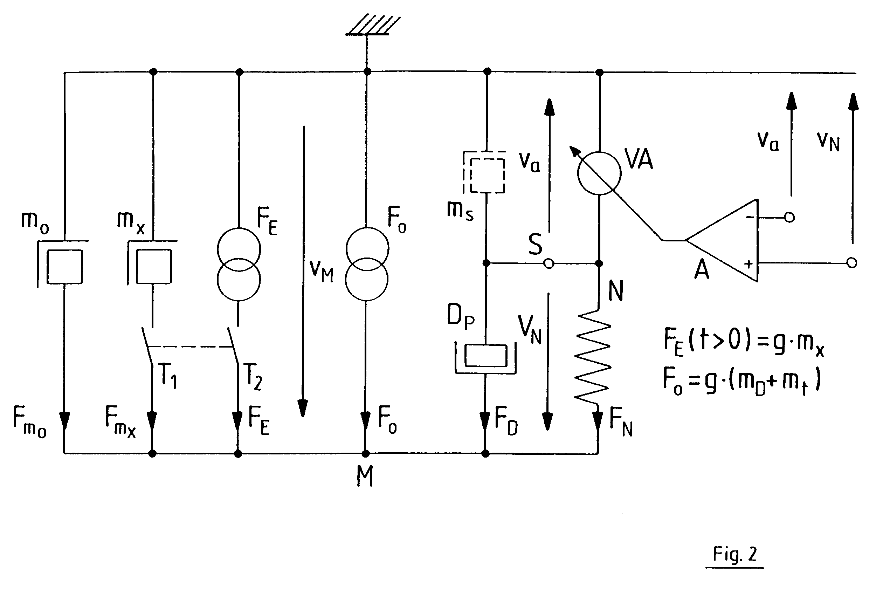

Aus diesem Grund wird in einer erfindungsgemäßen Weiterbildung der Meßeinrichtung die Wegsteuerung/-regelung durch eine Geschwindigkeitssteuerung/-regelung ersetzt. Das Blockschaltbild nach Fig. 2 zeigt ein solches System, in dem ein als Geschwindigkeitsaktuator wirkender Stellmotor VA das Aufnehmerwiderlager S mit einer Geschwindigkeit $v_a$ bewegt. "$m_x$" ist hier die träge Masse des Wägeguts, $F_E$ dessen Gewichtskraft, $m_o$ die träge Masse der bewegten Totlast des Meßsystems (Lastschale, etc.), und $F_o$ schließlich ist die Gewichtskraft dieser Totlast. Die Schalter $T_1$ und $T_2$ sind bis zum Zeitpunkt des Auflegens des Meßobjektes auf die Waagschale geöffnet, danach geschlossen, so daß die Gewichtskraft $F_E$ und die träge Masse $m_x$ dann auf das Meßsystem einwirken. N ist die nachgiebigkeit des elastischen Meßgrößenaufnehmers, $m_s$ die träge Masse des Aufnehmerwiderlagers und der mit ihm bewegten Teile, z.B. des Stellmotors. Parallel zur Meßfeder N wirkend ist ein Dämpfungselement $D_P$ angeordnet, das zum einen die natürliche Dämpfung (z.B. Luft), zum anderen ggf. weitere am Meßsystem angebrachte künstliche Dämpfungseinrichtungen einschließt.

Die Steuereingänge der Steuerelektronik A für den Stellmotor VA werden mit Signalen beaufschlagt, die zum einen der Geschwindigkeit $V_a$ des Aufnehmerwider lagers und zum anderen der Auslenkungsgeschwindigkeit $v_N$ der Meßfeder entsprechen. Die Differenz beider Signale wird mit dem Faktor k verstärkt, so daß der Stellmotor das Widerlager seinerseits mit der Geschwindigkeit $v_a$ bewegt. Infolgedessen gilt:

$$(3) \qquad V_a = K \cdot (V_N - V_a) = \frac{K}{1 + k} \cdot V_N$$

Nach einer sprungförmigen Änderung der Meßgröße erreicht auch dieses erfindungsgemäß ausgestattete, kompensierende Meßsystem wie ein herkömmliches den neuen stationären Gleichgewichtszustand über eine gedämpfte, d.h. allmählich abklingende Schwingung, wobei die Auslenkung $s_N(t)_B$ der Meßfeder aber den folgenden zeitlichen Verlauf haben:

$$(4) \qquad s_N(t)_B = s_o + \hat{s}_o \left[1 - \frac{1}{\sqrt{1-(1+K)D_o{}^2}} e^{-(1+K)D_o\omega_o t} COS(\sqrt{1+K} \cdot \omega_o t \cdot \ell)\right]$$

Hier haben also die Oszillationen eine Eigenfrequenz $f_{oB}$ und ein Dämpfungsmaß $D_B$, die im Vergleich zum System ohne Kompensation mit den Kenngrößen $f_o$ und $D_o$ jeweils um den Faktor $(1 + k)^{0,5}$ angewachsen sind. Es gilt also:

$$(5) \qquad \frac{1}{T_{oB}} = f_{oB} = f_o\sqrt{1 + K} \quad und \quad D_B = D_o\sqrt{1 + K}$$

Mindestens ebenso bedeutsam ist die Tatsache, daß hiermit gleichzeitig auch die Schwingungen $s_m(t)_B$ der Lasteinleitungsstelle und damit des Meßobjektes um den Faktor $(1 + k)^{-1}$ kleiner werden:

$$(6) \qquad S_m(t)_B = S_N(t) - S_a(t) = \frac{1}{1+K} \cdot S_N(t)_B$$

so daß das Meßsystem auch um diesen Faktor $(1 + k)$ weniger nachgiebig erscheint.

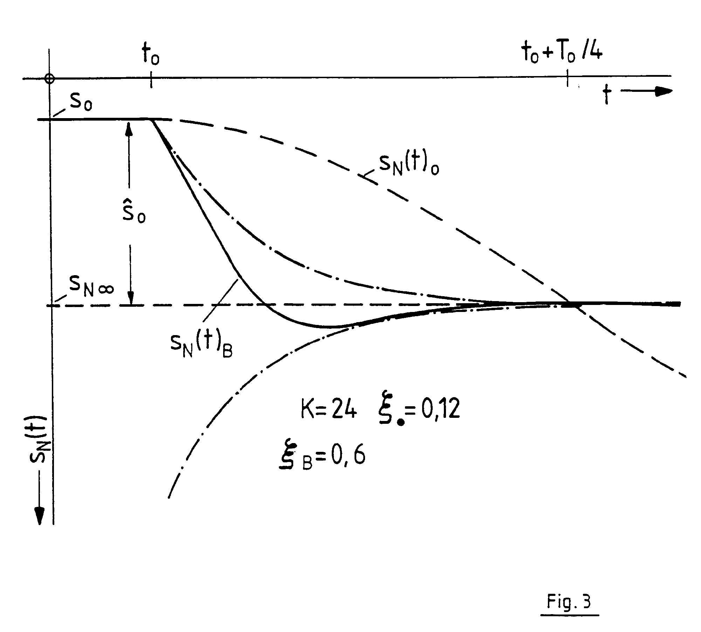

Da nun bei geeigneter Wahl des Verstärkungsfaktors k zum einen gemäß Formel (5) die Periodendauer $T_{oB}$ reduziert und gleichzeitig das Dämpfungsmaß $D_B$ signifikant erhöht werden kann, ist es möglich, erfindungsgemäße Meßeinrichtungen mit einem wünschenswerten Dämpfungsmaß $D_B$ in der Nähe der kritischen Dämpfung (D = 1) zu realisieren, auch wenn das Aufnehmersystem von sich aus nur über die natürliche Eigendämpfung oder einfache Dämpfungseinrichtungen verfügt. Als Beispiel hierfür zeigt Fig.3 das Einschwingverhalten einer erfindungsgemäßen Meßeinrichtung im Vergleich zu demjenigen eines nur schwach gedämpften, herkömmlichen elastischen Meßsystems. Der Verstärkungsfaktor k wurde hier mit 24 festgelegt, d.h. die Eigenfrequenz $f_o$ des Systems erhöht sich ebenso wie das Dämpfungsmaß $D_o$ (im Beispiel gilt: $D_o = 0{,}12$) durch die erfindurgsgemäße Kompensationsvorrichtung auf das Fünffache.

Zum Zeitpunkt $t = t_o$ wird die Meßgröße sprungförmig verändert, wodurch die Meßfeder im stationären Gleichgewichtszustand um den Wert $\hat{s}_o$ ausgelenkt wird. Zum Zeitpunkt $t = t_o + T_o/4$, wenn die Auslenkung $s_N(t)_o$ der Meßfeder des herkömmlichen Systems zum ersten Mal mit hoher Geschwindigkeit ihre spätere Gleichgewichtslage $s_{N\infty} = s_o + \hat{s}_o$ durchläuft, führt die Meßfeder des erfindungsgemäß ausgestatteten Systems nur noch Schwingungen mit einer auf $T_o/5$ reduzierten Periodendauer $T_{oB}$ aus, deren Restwelligkeit bereits kleiner als 0,89 % von $\hat{s}_o$ ist.

So lange die Gesamtmasse $m_s$ aller durch den Stellmotor gemeinsam mit dem Aufnehmerwiderlager bewegten Elemente der Vorrichtung klein gegenüber der Gesamtmasse $m_o + m_x$ von Meßgröße und Lastschale etc. ist, verhält sich das Meßsystem gleich wie die Anordnung nach Fig. 2., wenn gemäß Fig. 4 die parallel zur Meßfeder wirkende Dämpfungseinrichtung $D_P$ aus Fig. 2 durch einen seriell wirkenden Dämpfer $D_s$ ersetzt wird. Auch hier wächst durch ein erfindungsgemäß ausgestattetes Meßsystem das Dämpfungsmaß $D_{os}$ auf eine Wert $D_{Bs} = D_{os} (1 + k)^{0{,}5}$ an. Wie bereits oben dargelegt, ist der Aufbau einer solchermaßen ausgestatteten Meßvorrichtung i.a. wenig zweckmäßig, da der seriell wirkende Dämpfer auch noch nach dem vollständigen Einschwingen der Meßvorrichtung voll von der Meßgröße beaufschlagt wäre. Der Stellmotor VA müßte dann den Eingang E der Dämpfungsvorrichtung $D_s$ ständig bewegen, um ihren Ausgang S in Ruhe zu halten.

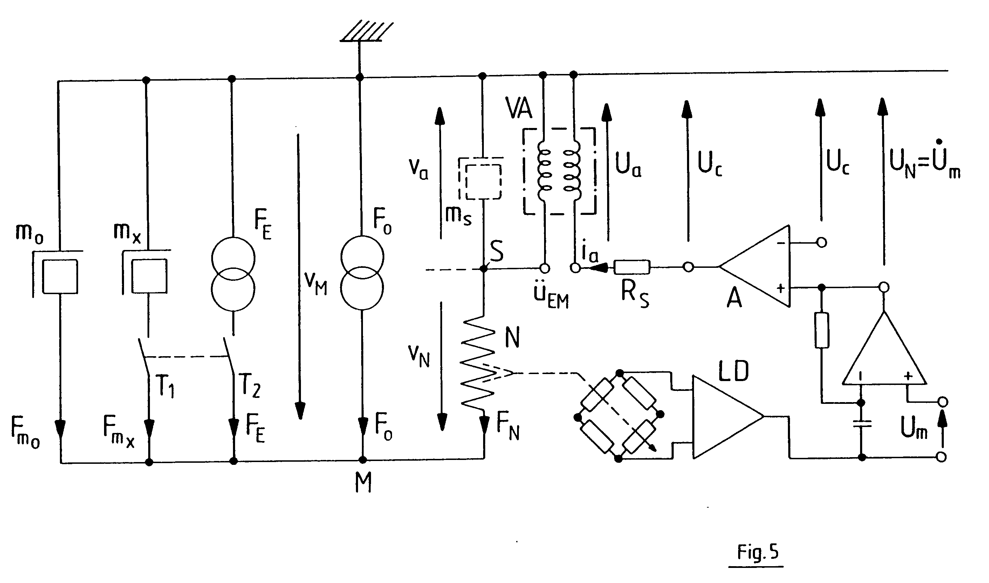

Entsprechend den Methoden der Systemanalyse läßt sich die mechanische Dämpfungseinrichtung $D_s$ jedoch in einen enfachen ohm'schen Widerstand $R_s$ gemäß Fig. 5 transformieren, wenn der Stellmotor VA so ausgelegt ist, daß für sein elektromechanisches Übersetzungsverhältnis $\ddot{u}_{EM}$ gilt:

$$(7) \qquad \ddot{u}_{EM} = \frac{U_a}{v_a} = \frac{F_N}{i_a}$$

In der so ausgestatteten erfindungsgemäßen Meßvorrichtung übernimmt also ein einfaches elektrisches Bauelement, in der Anordnung gemäß Fig. 5 der ohm'sche Widerstand $R_s$, die ansonsten oft nur aufwendig durch eine entsprechende Einrichtung $D_s$ oder $D_P$ zu realisierende mechanische Dämpfung teilweise oder auch vollständig.

## Patentansprüche

1. Verfahren zur Bestimmung mechanischer Meßgrößen, umfassend die Schritte:
elastische Verformung eines Meßgrößenaufnehmers (1) unter der Einwirkung der zu bestimmenden Meßgröße;
Umformung der mechanischen Meßgröße in ein elektrisches Meßsignal mittels eines wegfühlenden Meßgrößenaufnehmers (6);
**gekennzeichnet** durch die weiteren Verfahrensschritte:
Kompensation des Federweges des elastischen Aufnehmers (1) durch motorische Erzeugung einer Gegenbewegung des Aufnehmerwiderlagers (5),
Steuerung der Gegenbewegung durch das elektrische Ausgangssignal des wegfühlenden Meßgrößenaufnehmers (6).

2. Verfahren nach Anspruch 1, dadurch gekennzeichnet, daß die gesteuerte Gegenbewegung des Widerlagers bis zum völligen Abklingen von Federwegoszillationen fortgeführt wird.

3. Verfahren nach einem der Ansprüche 1 oder 2, dadurch gekennzeichnet, daß die Gegenbewegung des Widerlagers durch einen Wegaufnehmer bestimmt und mit dessen Hilfe geregelt wird.

4. Verfahren nach einem der Ansprüche 1 oder 2, dadurch gekennzeichnet, daß die Differenzgeschwindigkeit der Bewegungen von Aufnehmerwiderlager und Lasteinleitungsstelle bestimmt und zur Steuerung oder Regelung der Gegenbewegung des Widerlagers herangezogen wird.

5. Verfahren nach einem der Ansprüche 1 bis 4, dadurch gekennzeichnet, daß die Bewegung des Widerlagers intelligent geregelt wird.

6. Verfahren nach einem der Ansprüche 1 bis 5, dadurch gekennzeichnet, daß die Eigendämpfung der schwingungsfähigen Meßeinrichtung teilweise oder vollständig von der elektrischen Schaltung zur Steuerung- oder Regelung der Gegenbewegung übernommen wird.

7. Verfahren nach einem der Ansprüche 1 bis 6, dadurch gekennzeichnet, daß die Leistungen für das Ausführen der Gegenbewegungen durch einen elektrischen oder elektromagnetischen oder elektrohydraulischen oder piezoelektrischen oder sonstigen elektrisch ansteuerbaren Stellmotor aufgebracht werden.

8. Verfahren nach einem der Ansprüche 1 bis 7, dadurch gekennzeichnet, daß der Stellmotor zwar das Aufnehmerwiderlager, dieses jedoch nicht den Stellmotor bewegen kann.

9. Meßeinrichtung zur Bestimmung mechanischer Meßgrößen mit einem sich unter der Einwirkung der zu bestimmenden Meßgröße elastisch verformenden Meßgrößenaufnehmer, der die mechanische Meßgröße in ein proportionales elektrisches Meßsignal umformt, **gekennzeichnet** durch eine Einrichtung zur Verstellung der Position des Aufnehmerwiderlagers mittels eines elektrisch steuerbaren Stellmotors (9), der das Widerlager (S) des Meßgrößenaufnehmers (1) nach einer Änderung der Meßgröße bewegt; eine Schaltung (7,8) zur Ansteuerung des Stellmotors (9) durch das elektrische Ausgangssignal des wegfühlenden meßgrößenaufnehmers (6).

10. Meßeinrichtung nach Anspruch 9, dadurch gekennzeichnet, daß ein Lagesensor (5) und eine Schaltung (7,8) zur Regelung der Gegenbewegung ($s_N$) des Widerlagers (S) durch die vom Meßgrößenaufnehmer gelieferte Führungsgröße $u_m$ vorgesehen ist.

11. Meßeinrichtung nach einem der Ansprüche 9 oder 10, dadurch gekennzeichnet, daß eine Einrichtung zur Bestimmung der Differenzgeschwindigkeit der Bewegungen von Lasteinleitungsstelle (M) und Widerlager (S) vorgesehen wird und das von dieser Einrichtung gelieferte Signal über eine geeignete Schaltung die Bewegung des Widerlagers (S) steuert oder regelt.

12. Meßeinrichtung nach einem der Ansprüche 9 bis 11, dadurch gekennzeichnet, daß eine intelligente Schaltung mit Mikrorechner zur Steuerung oder Regelung der Gegenbewegung ($s_a$) des Widerlagers (S) eingesetzt ist.

13. Meßeinrichtung nach einem der Ansprüche 9 bis 12, dadurch gekennzeichnet, daß in der Schaltung zur Steuerung bzw. Regelung der Gegenbewegung des Aufnehmerwiderlagers ein elektrisches Bauelement zur Dämpfung der schwingungsfähigen Meßeinrichtung vorgesehen ist.

14. Meßeinrichtung nach einem der Ansprüche 9 bis 13, dadurch gekennzeichnet, daß die Meßeinrichtung einen elektrischen oder elektromagnetischen oder elektrohydraulischen oder piezoelektrischen Stellmotor zur Erzeugung der Gegenbewegung umfaßt.

15. Meßeinrichtung nach einem der Ansprüche 9 bis 14, dadurch gekennzeichnet, daß der verwendete Stellmotor mit einer Einrichtung zur Selbsthemmung versehen ist.

**Claims**

1. Process for determining mechanical measurements, comprising the steps:

elastic deformation of a measurement pick-up (1) under the influence of the measurement to be determined;

transformation of the mechanical measurement to an electrical measuring signal by means of a path-sensing measurement pick-up (6);

characterised by the further process steps:

compensation of the spring path of the elastic pick-up (1) by motor-powered generation of a counter-movement of the pick-up abutment (S),

control of the counter-movement by the electrical output signal of the path-sensing measurement pick-up (6).

2. Process in accordance with Claim 1, characterised in that the controlled counter-movement of the abutment is continued until the spring path oscillations have faded completely.

3. Process in accordance with one of Claims 1 or 2, characterised in that the counter-movement of the abutment is determined by a path pick-up and regulated with the aid of this.

4. Process in accordance with one of Claims 1 or 2, characterised in that the differential speed of the movements of pick-up abutment and load triggering point is determined and used to control or regulate the counter-movement of the abutment.

5. Process in accordance with one of claims 1 to 4, characterised in that the movement of the abutment is regulated intelligently.

6. Process in accordance with one of claims 1 to 5, characterised in that the selt-damping of the oscillatory measuring device is partially or wholly taken over by the electric circuit for controlling or regulating the counter-movement.

7. Process in accordance with one of claims 1 to 6, characterised in that the power for performing the counter-movements is produced by an electrical or electro-magnetic or electro-hydraulic or piezo-electric or other electrically controllable servo-motor.

8. Process in accordance with one of claims 1 to 7, characterised in that the servo-motor can move the pick-up abutment, but this cannot move the servo-motor.

9. Measuring device for determining mechanical measurements with a measurement pick-up which deforms elastically under the influence of the measurement to be determined, which converts the mechanical measurement into a proportional electrical signal, characterised by a device for adjusting the position of the pick-up abutment by means of an electrically controllable servo-motor (9), which moves the abutment (S) of the measurement pick-up (1) after a change in the measurement; a circuit (7, 8) for controlling the servo-motor (9) by the electrical output signal of the path-sensing measurement pick-up (6).

10. Measuring device in accordance with Claim 9, characterised in that a position sensor (5) and a circuit (7,8) for regulating the counter-movement (sN) of the abutment (S) is provided by the guide quantity um supplied by the measurement pick-up.

11. Measuring device in accordance with one of Claims 9 or 10, characterised in that a device for determining the differential speed of the movements of the load triggering point (M) and the abutment (S) is provided and that the signal supplied by this device controls the movement of the abutment (S) via a suitable circuit.

12. Measuring device in accordance with one of Claims 9 to 11, characterised in that an intelligent circuit with microcomputer is used to control or regulate the counter-movement (sa) of the abutment (S).

13. Measuring device in accordance with one of Claims 9 to 12, characterised in that in the circuit for controlling or regulating the counter-movement of the abutment, an electrical structural element is provided to damp the oscillatory measuring device.

14. Measuring device in accordance with one of Claims 9 to 13, characterised in that the measuring device comprises an electrical or electro-magnetic or electro-hydraulic or piezo-electric servo-motor to generate the counter-movement.

15. Measuring device in accordance with one of Claims 9 to 14, characterised in that the servo-motor used is provided with a device for self-inhibiting.

## Revendications

1. Procédé pour la détermination de grandeurs mécaniques comportant les étapes suivantes :
Déformation élastique d'un capteur de mesure de grandeur (1) sous l'action de la grandeur à mesurer;
Transformation de la mesure mécanique en signal de mesure électrique à l'aide d'un capteur de mesure à palpeur (6)
caractérisé par les étapes de procédé suivantes :
Compensation de la course du ressort du capteur élastique (1) par la production motorisée d'un mouvement en sens opposé de la butée du capteur (5)
Pilotage du mouvement en sens opposé par le signal électrique de sortie du capteur de mesure à palpeur (6).

2. Procédé selon la revendication 1, caractérisé en ce que le mouvement en sens opposé de la butée se poursuit jusqu'à l'arrêt complet des oscillations du ressort.

3. Procédé selon une des revendications 1 ou 2, caractérisé en ce que le mouvement en sens opposé de la butée est défini par un capteur de déplacement et réglé grâce à lui.

4. Procédé selon l'une des revendications 1 ou 2, caractérisé en ce que la différence de vitesse entre les mouvements de la butée du capteur et la position de réglage de la charge est déterminée et est utilisée pour le pilotage ou le réglage du mouvement opposé de la butée.

5. Procédé selon l'une des revendications 1 à 4, caractérisé en ce que le mouvement de la butée est réglé de manière intelligente

6. Procédé selon l'une des revendications 1 à 5, caractérisé en ce que l'auto-amortissement du dispositif de mesure vibrant est obtenu entièrement ou en partie par le circuit électrique de pilotage ou de réglage du mouvement en sens opposé.

7. Procédé selon l'une des revendications 1 à 6, caractérisé en ce que les puissances nécessaires à l'éxécution des mouvements en sens opposé sont produites par un servomoteur à pilotage électrique, ou électromagnétique, ou électrohydraulique ou piezoélectrique ou d'un pilotage électrique différent.

8. Procédé selon l'une des revendications de 1 à 7, caractérisé en ce que le servomoteur peut mouvoir la butée du capteur mais que celle-ci ne peut pas déplacer le servomoteur

9. Installation de mesure pour la détermination de grandeurs mécaniques avec un capteur de mesure déformé de manière élastique sous l'influence de la grandeur à mesurer, qui convertit la grandeur à mesurer en un signal de mesure électrique proportionnel, caractérisée en ce qu'une installation de changement de position de la butée du capteur au moyen d'un servomoteur (9) à commande électronique, fait bouger la butée (S) du capteur de mesure de grandeur (1) après une variation de la grandeur à mesurer; et par un circuit (7,8) de pilotage du servomoteur (9) par le signal de sortie électrique du capteur de mesure de grandeur à palpeur de position (6)

10. Installation de mesure selon la revendication 9, caractérisée en ce qu'un capteur de position (5) et un circuit (7,8) sont prévus le réglage du mouvement en sens opposé (SN) de la butée (S) au moyen de la grandeur de référence livrée par le capteur de grandeur.

11. Installation de mesure selon la revendication 9 ou 10, caractérisée en ce qu'une installation de détermination de la vitesse différentielle des mouvements de la position de réglage de la charge (M) et de la butée (S) a été prévue et que le signal émis par cette installation pilote ou règle par un circuit approprié le mouvement de la butée (S).

12. Installation de mesure selon l'une des revendications 9 à 11, caractérisée en ce qu'un circuit intelligent à micro-processeur est prévu pour le pilotage ou le réglage du mouvement en sens opposé (Sa) de la butée (S).

13. Installation de mesure selon l'une des revendications 9 à 12, caractérisée en ce qu'un composant électrique est prévu dans le circuit de pilotage et de réglage du mouvement en sens opposé de la butée du capteur pour l'amortissement du système de mesure vibrant.

14. Installation de mesure selon l'une des revendications 9 à 13, caractérisée en ce que l'installation de mesure comporte un servomoteur à pilotage électrique, ou électromagnétique, ou électrohydraulique ou piézoélectrique ou d'un pilotage électrique différent pour la génération du mouvmeent en sens opposé.

15. Installation de mesure selon l'une des revendications 9 à 14, caractérisée en ce que le servomoteur utilisé est équipé d'une installation d'auto-blocage.

$$F_{o+g}$$

Fig. 1

$$F_E(t>0) = g \cdot m_x$$
$$F_o = g \cdot (m_D + m_t)$$

Fig. 2

EP 0 436 577 B1

Fig. 3

Fig. 4

Fig. 5

EP 0 436 577 B1